# FASCICULE DE BREVET EUROPEEN

(11) **EP 2 508 289 B1**
(45) Date de publication et mention de la délivrance du brevet: **02.07.2014**
(21) Numéro de dépôt: 12156364.7
(22) Date de dépôt: 21.02.2012
(51) Int. Cl.: B23K 10/00, H05H 1/34, H05H 1/28, B23K 37/00

(54) **Torche de découpe plasma à refroidissement amélioré**
Plasma-Schneidbrenner mit verbesserter Kühlung
Plasma cutting torch with improved cooling

(30) Priorité: 06.04.2011 FR 1152985
(43) Date de publication de la demande: 10.10.2012
(73) Titulaire: AIR LIQUIDE WELDING FRANCE, 75007 Paris (FR)
(72) Inventeur: De Laurentis, Cataldo, 95800 Cergy-le-Haut (FR); Remy, Francis, 95130 Franconville (FR)
(74) Mandataire: Pittis, Olivier

(56) Documents cités:
- EP-A1- 0 481 958
- DE-A1- 3 930 267
- US-A- 3 676 639
- US-B1- 6 329 627

## Description

L'invention concerne une torche de découpe plasma à vortex d'eau avec tête ou nez démontable dont le refroidissement interne du corps de torche est amélioré.

Les torches de découpe plasma sont sujettes à des conditions d'utilisation générant des températures élevées allant jusqu'à 70°C ou plus sur la surface externe du corps de torche. En effet, le passage du courant à l'intérieur de la torche génère de la chaleur par effet Joule. En même temps, la présence du jet plasma contribue à chauffer les consommables et d'autres éléments de la torche à des températures très élevées, c'est-à-dire supérieures à 100°C pour les éléments non refroidis. Enfin, la torche évolue dans un environnement chaud avec projections de métal fondu, rayonnements, émissions de fumée et de vapeur d'eau...

En conséquence, les températures atteintes dans le corps de torche, lors de son utilisation, par exemple en découpe de fortes épaisseurs, c'est-à-dire typiquement au moins quelques dizaines de mm, et à haute intensité, c'est-à-dire d'au moins 200 A, peuvent être élevées comme déjà mentionné.

Cela génère des risques pour l'utilisateur qui est amené, pendant les phases de manipulation du nez de la torche, c'est-à-dire de la partie avant de la torche, qui sont nécessaires pour changer les consommables, à toucher la torche après une coupe.

De plus, les hautes températures induisent un vieillissement accéléré ou, dans le cas extrême, la fusion de parties composants le corps de torche.

Il est donc nécessaire de refroidir au mieux l'intérieur du nez ou tête de torche.

Cela se fait, dans la plupart des torches par le biais d'un circuit de refroidissement fermé qui permet la circulation d'un liquide, telle de l'eau distillée, dans le corps de torche jusqu'aux consommables, typiquement tuyère et électrode, et qui passe par des canalisations ou autres conduits traversant le corps de torche.

Il est aussi possible de refroidir les composants de torches de découpe plasma grâce à un flux gazeux circulant au contact desdits composants. Ainsi, le document EP-A-0481958 divulgue une torche de découpe plasma comprenant un écran refroidi par passage d'un flux de gaz, ledit flux de gaz circulant dans un conduit de refroidissement traversant le corps de torche jusqu'à l'écran de la torche. L'écran est muni d'orifices par lesquels le gaz de refroidissement est expulsé hors de la torche.

Or, la majorité des torches existantes sont constituées d'un corps essentiellement fabriqué avec des matériaux isolants électriques, à l'exception des parties qui doivent conduire le courant, comme le TechtronⓇ ou le Vespel®. Le document DE-A-3930267 divulgue notamment une torche à plasma d'arc dont le corps est formé d'un matériau isolant et plus précisément de polytétrafluoroéthylène (PTFE).

Cela permet d'augmenter l'isolation entre le potentiel négatif (électrode) et positif par rapport à l'électrode (tuyère) et d'éviter des pertes de courant lors de l'utilisation de la torche.

Or, il se trouve que ces matériaux isolants ont aussi la caractéristique d'être de mauvais conducteurs de chaleur. Donc, leur utilisation ne favorise pas la transmission de la chaleur de la zone où elle est générée jusqu'au circuit de refroidissement.

Ainsi, l'efficacité du système de refroidissement est inférieure, en termes de calories enlevées dans le corps de torche, à ce qu'elle pourrait être si, dans les mêmes conditions d'utilisation de la torche, le corps était fait d'un matériau qui conduit bien la chaleur.

Une solution existante pour améliorer le refroidissement des composants de torche plasma est de faire circuler le fluide de refroidissement dans un matériau qui soit un bon conducteur thermique. Par exemple, le document US-A-3,676,639 divulgue une électrode pour torche à plasma d'arc dont le corps est formé d'un matériau conducteur électrique, en particulier un matériau métallique, tel que du laiton ou du cuivre, qui présente aussi l'avantage d'être un bon conducteur thermique. Un liquide de refroidissement est amené à l'intérieur du corps de l'électrode par un conduit formé d'un matériau non conducteur.

Toutefois, ceci ne résout pas un problème qui se pose lorsque la torche plasma est une torche à vortex d'eau.

En effet, dans le cas particulier des torches actuelles de découpe plasma avec tourbillon ou vortex d'eau, comme la torche CPM720 d'Air Liquide Welding, l'alimentation en eau de vortex se fait par le biais d'une canalisation extérieure qui emmène l'eau directement aux consommables, en particulier la tuyère aval distribuant le vortex d'eau, sans qu'elle ne passe par le corps de torche. L'eau de vortex n'est donc pas utilisée pour améliorer le pompage de calorie du corps de torche, c'est-à-dire pour refroidir la torche.

Le document US-A-6,329,627 propose une torche à plasma d'arc munie d'une tuyère amont et d'une tuyère aval dont le corps est traversé par un conduit d'amenée de liquide, lequel conduit alimente la tuyère aval.

Toutefois, cette solution n'est pas idéale et pose un problème majeur.

D'une part, l'évacuation des calories résultant de la circulation du liquide de refroidissement dans le corps de torche n'est pas optimale du fait que ledit corps est généralement formé d'un matériau conduisant mal la chaleur.

D'autre part, ceci engendre un problème supplémentaire lorsque le liquide circulant dans le corps de torche, ainsi qu'au contact des autres composants de la torche, présente une conductivité électrique qui n'est pas négligeable. C'est le cas pour les torches plasma à vortex d'eau où, pour limiter les coûts de production, l'eau de vortex est généralement de l'eau du réseau, c'est-à-dire de l'eau non déminéralisée, plus conductrice que l'eau de refroidissement. En effet, le liquide de refroidissement est souvent constitué par de l'eau déminéralisée ayant une conductivité électrique de l'ordre de 10 à 20 µS/cm, alors que l'eau utilisée pour le vortex peut atteindre des valeurs de conductivité entre 10 et 20 fois plus élevées.

Or, la présence de minéraux dans l'eau conduit à la formation de liaisons électriques intempestives à l'intérieur de la torche entre le potentiel de l'électrode et de la tuyère si le canal d'alimentation d'eau de vortex n'est pas opportunément isolé.

En effet, certaines surfaces des composants de la torche, entre lesquels s'établissent des différences de potentiels électriques lors du fonctionnement de la torche, se trouvent en contact avec le même trajet d'eau non déminéralisée. Elles sont donc reliés électriquement.

Ces liaisons électriques affectent la durée de vie des composants de la tête de torche à plasma d'arc car elles peuvent engendrer des phénomènes d'hydrolyse entre ces composants. Ces phénomènes d'hydrolyse entraînent la dissolution, ou dit autrement l'attaque ou la corrosion électrolytique, de certains composants de la torche et favorisent la destruction accélérée de la torche.

De plus, ces liaisons électriques parasites conduisent inévitablement à l'apparition de courants de fuite. Ceux-ci provoquent des baisses de tensions, ce qui entraîne des difficultés d'amorçage du fait d'une diminution de l'énergie disponible pour amorcer l'arc électrique, ainsi que des perturbations de la détection de la tôle par la torche. Il s'ensuit que le procédé de coupage mis en oeuvre est moins performant et moins fiable.

Le problème qui se pose est de proposer une torche de découpe plasma à vortex d'eau, à tête ou nez démontable, conçue afin d'améliorer le refroidissement interne du corps mais sans créer de liaisons électriques parasites susceptibles de détériorer la torche.

La solution concerne une torche à plasma comprenant un corps de torche traversé par au moins un conduit d'amenée d'eau, le corps de torche étant majoritairement réalisé en un matériau électriquement conducteur et ledit conduit d'amenée d'eau étant en un matériau isolant électrique, et laquelle comprend en outre des moyens de création d'un vortex d'eau alimentés en eau par ledit conduit d'amenée d'eau en un matériau isolant électrique.

Grâce à la solution de l'invention, l'eau de vortex est mise à profit pour rendre plus efficace le refroidissement du corps de torche, tout en évitant la création de liaisons parasites électriques dans le au moins un conduit d'amenée d'eau de vortex.

Selon le cas, la torche à plasma de l'invention peut comprendre l'une ou plusieurs des caractéristiques suivantes :
- elle comporte en outre une tuyère amont et une électrode.
- les moyens de création de vortex comprennent une tuyère aval agencée en aval de la tuyère amont.
- les moyens de création de vortex comprennent plusieurs rainures, orifices, conduits ou analogues aménagés tangentiellement à l'orifice de sortie de la tuyère aval.
- le corps de torche est majoritairement réalisé en un matériau électriquement conducteur choisi parmi les métaux et les alliages de métaux.
- le corps de torche est majoritairement réalisé en un matériau électriquement conducteur choisi parmi les métaux ayant une conductivité thermique supérieure ou égale à 50 W/mK.
- le conduit d'amenée d'eau est en un matériau isolant électrique ayant une résistivité électrique transversale supérieure ou égale à 10¹¹ Ohm.cm.
- elle comprend une tête de torche démontable portant la tuyère amont et l'électrode.
- le corps de torche est majoritairement réalisé en un matériau électriquement conducteur choisi parmi le cuivre et ses alliages.
- le conduit d'amenée d'eau est en un matériau isolant électrique choisi parmi les plastiques isolants et hydrophobes.

L'invention concerne en outre un procédé de coupage par jet de plasma, dans lequel on met en oeuvre une torche à plasma selon l'invention pour couper une pièce en matériau métallique, notamment en alliage ferreux, en cuivre ou en alliage cuivreux, en aluminium ou en alliage d'aluminium, en titane ou en alliage de titane, de préférence la pièce est en acier inoxydable ou en acier doux.

Dans le cadre de l'invention, la torche peut être agencée sur une poutre, de préférence la tête de coupage est mobile sur la poutre, laquelle poutre est elle-même mobile sur un bâti-support surplombant une table de découpe portant la pièce à couper.

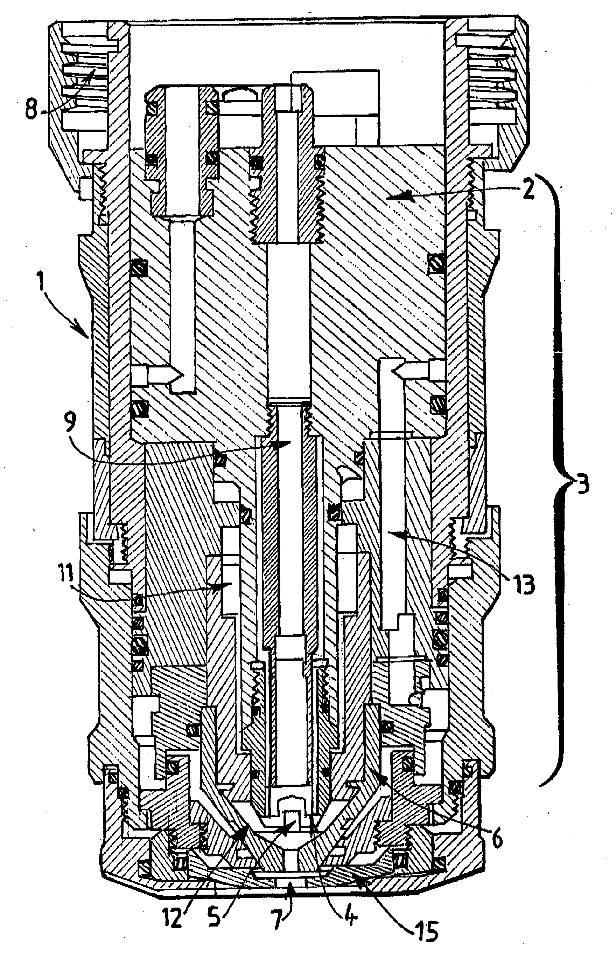

Un mode de réalisation d'une torche de découpe par plasma selon l'invention est schématisé sur la Figure ci-annexée qui représente une torche 1 à plasma formée d'une embase fixe ou corps de torche qui est généralement agencée sur une poutre mobile ou analogue sur laquelle vient se fixer par vissage ou analogue (en 8) une tête de torche 3 , aussi appelée « nez » de torche, démontable, c'est-à-dire pouvant être solidarisée ou désolidarisée de l'embase.

La tête de torche 3 comprend les éléments actifs de la torche 1, en particulier une électrode 4 à insert émissif 5 en hafnium, zirconium ou tungstène par exemple, et une tuyère amont 6 espacée de l'électrode de manière à former entre elle une chambre 12 plasmagène dans laquelle est introduit un gaz ou mélange gazeux plasmagène qui est ionisé par l'arc électrique se formant sur l'insert 5 de l'électrode 4. Les consommables, c'est-à-dire l'électrode 4 et la tuyère amont 6, sont refroidis par le biais d'un débit d'eau circulant dans un circuit de refroidissement 9. Le gaz ionisé sous forme d'un jet de plasma sort de la tête de torche 3 par un orifice de sortie 7 situé en regard de la pièce à découper, telle une tôle d'acier au carbone ou d'acier inoxydable par exemple.

En outre, la tête de torche 3 comprend des moyens de création de vortex aptes à et conçus pour créer, au cours du fonctionnement de la tête, un jet d'eau se propageant jusqu'à la tôle à découper en tourbillonnant (vortex) autour du plasma d'arc produit par la torche, ce qui permet de constricter la colonne de plasma, c'est-à-dire de former autour de celle-ci un manchon d'eau animé d'un mouvement tourbillonnant.

De préférence, les moyens de création de vortex comprennent une tuyère aval 15, agencée en aval de la tuyère amont 6.

Selon un mode de réalisation de l'invention, la tuyère aval 15 comprend plusieurs rainures, conduits ou analogues, usinés, i. e. aménagés, de préférence tangentiellement à l'orifice de sortie de la tuyère aval 15. L'eau de vortex est injectée par les rainures, conduits ou analogues et se propage en tourbillonnant jusqu'à l'orifice de sortie de la tuyère aval 15.

Le corps de torche comprend, quant à lui, un conduit interne de gaz 11 permettant d'acheminer le gaz plasmagène jusqu'à la chambre plasmagène 12, ainsi qu'un conduit 13 interne amenant l'eau servant à créer le vortex, c'est-à-dire le tourbillon d'eau qui est distribué autour du j et de plasma et qui sert à le constricter, jusqu'à la tuyère aval 15.

Par ailleurs, selon l'invention, le corps 2 de torche est fabriqué en un matériau, typiquement un métal ou un alliage métallique, qui conduit bien la chaleur, c'est-à-dire en un matériau dont la conductivité thermique n'est pas inférieure à 50 W/mK, de manière à favoriser la transmission de la chaleur des zones plus chaudes au circuit de refroidissement.

Par exemple, le cuivre et ses alliages sont d'excellents conducteurs de chaleur avec une conductivité thermique de l'ordre de 400 W/mK. Selon l'invention, le corps 1 de la torche peut donc être fabriqué en tout ou en partie en cuivre ou en alliage de cuivre.

Le pompage de calories effectué par le liquide au sein des conduits 9, 13 est donc majeur, toutes conditions égales par ailleurs, par rapport à une torche ayant un corps fabriqué en matériau thermiquement isolant, c'est-à-dire présentant une conductivité thermique 100 fois plus faible que celle des métaux.

Dans une torche plasma à vortex d'eau, l'eau nécessaire à la mise en oeuvre du procédé de découpe avec vortex d'eau, participe aussi au refroidissement du corps 1 de torche.

Toutefois, cela engendre un problème supplémentaire lié au fait que l'eau de vortex est généralement plus conductrice que l'eau de refroidissement. En effet, le liquide de refroidissement est souvent constitué par de l'eau déminéralisée ayant une conductivité électrique de l'ordre de 10 à 20 µS/cm, alors que l'eau utilisée pour le vortex peut atteindre des valeurs de conductivité entre 10 et 20 fois plus élevées puisque, pour des questions d'économie, l'eau du réseau, donc non déminéralisée, est généralement utilisée comme eau de vortex.

Or, la présence de minéraux dans l'eau conduit à la formation de liaisons électriques intempestives à l'intérieur de la torche entre le potentiel de l'électrode 4 et de la tuyère 6 si le canal d'alimentation d'eau de vortex n'est pas opportunément isolé.

Ces liaisons électriques peuvent engendrer, quant à elles, des phénomènes d'hydrolyse entre le porte-électrode et le porte-tuyère, favorisant la destruction accélérée de la torche 1.

Dans le cadre de cette invention, on évite ce problème en isolant électriquement le circuit d'alimentation 13 d'eau de vortex. Plus précisément, on met en oeuvre une canalisation en matériau isolant insérée dans le corps 2 de torche 1, c'est-à-dire dans la matrice par exemple en cuivre ou alliage de cuivre formant le corps 2 de la torche.

Pour garantir une isolation électriquement suffisante du corps 1 de torche, la conduite d'eau de vortex est réalisée en un matériau ayant une résistivité électrique transversale d'au moins 10¹¹ Ohm·cm ; la résistivité électrique transversale étant caractérisée par le rapport entre la tension appliqué aux extrêmes d'un volume et le courant qui le traverse.

Typiquement, les matériaux plastiques comme le Techtron® qui sont caractérisés par une résistivité électrique de l'ordre de 10¹⁵ Ohm·cm conviennent et peuvent être utilisés pour réaliser la conduite centrale de la torche 1.

Au final, on obtient selon l'invention, une torche plasma 1 à vortex d'eau dont le refroidissement du corps 2 est notablement amélioré, laquelle ne conduit pas à des liaisons électriques parasites.

Une telle torche à plasma à vortex d'eau peut être utilisée dans toute opération de coupage par jet de plasma d'une pièce en matériau métallique, notamment, en alliage ferreux, en cuivre ou en alliage cuivreux, en aluminium ou en alliage d'aluminium, en titane ou en alliage de titane. De préférence, la pièce est en acier inoxydable ou en acier doux.

Une torche selon l'invention peut être utilisée pour couper des matériaux de différentes épaisseurs, typiquement plus de 10 mm, de préférence au moins 20 mm, et notamment des matériaux de forte épaisseur, c'est-à-dire au moins quelques dizaines de mm, la tête de torche étant alimentée par un courant d'arc dont l'intensité est comprise entre 100 et 1000 A.

L'utilisation d'une torche selon l'invention intensité est particulièrement avantageuse lorsque le courant d'arc est de forte intensité, c'est-à-dire au moins 200 A, de préférence au moins 400 A, de préférence encore au moins 600 A. Les épaisseurs découpées peuvent alors être de plusieurs dizaines de mm à quelques centaines de mm.

La torche selon l'invention est adaptée à une utilisation sur une machine de coupage plasma. La torche est agencée, de préférence de manière mobile, sur une poutre, elle-même mobile sur un bâti-support surplombant une table de découpe portant une pièce à couper. En outre, la machine de coupage plasma est reliée à des moyens de commande permettant de piloter les déplacements de la poutre et/ou de la torche, de préférence une CNC.

## Revendications

1. Torche à plasma (1) comprenant un corps (2) de torche traversé par au moins un conduit (13) d'amenée d'eau, le corps (2) de torche étant majoritairement réalisé en un matériau électriquement conducteur et ledit conduit (13) d'amenée d'eau étant en un matériau isolant électrique, et **caractérisée en ce que** la torche comprend en outre des moyens de création d'un vortex d'eau alimentés en eau par ledit conduit (13) d'amenée d'eau en un matériau isolant électrique.

2. Torche selon la revendication 1, **caractérisée en ce qu'**elle comporte en outre une tuyère amont (6) et une électrode (4, 5).

3. Torche selon l'une des revendications 1 ou 2, **caractérisée en ce que** les moyens de création de vortex comprennent une tuyère aval (15) agencée en aval de la tuyère amont (6).

4. Torche selon l'une des revendications précédentes, **caractérisée en ce que** les moyens de création de vortex comprennent plusieurs rainures, orifices, conduits ou analogues aménagés tangentiellement à l'orifice de sortie de la tuyère aval (15).

5. Torche selon l'une des revendications précédentes, **caractérisée en ce que** le corps (2) de torche est majoritairement réalisé en un matériau électriquement conducteur choisi parmi les métaux et les alliages de métaux.

6. Torche selon l'une des revendications précédentes, **caractérisée en ce que** le corps (2) de torche est majoritairement réalisé en un matériau électriquement conducteur choisi parmi les métaux ayant une conductivité thermique supérieure ou égale à 50 W/mK.

7. Torche selon l'une des revendications précédentes, **caractérisée en ce que** ledit conduit (13) d'amenée d'eau est en un matériau isolant électrique ayant une résistivité électrique transversale supérieure ou égale à 10¹¹ Ohm.cm.

8. Torche selon l'une des revendications précédentes, **caractérisée en ce qu'**elle comprend une tête de torche (3) démontable portant la tuyère (6) et l'électrode (4, 5).

9. Torche selon l'une des revendications précédentes, **caractérisée en ce que** le corps (2) de torche est majoritairement réalisé en un matériau électriquement conducteur choisi parmi le cuivre et ses alliages.

10. Torche selon l'une des revendications précédentes, **caractérisée en ce que** ledit conduit (13) d'amenée d'eau est en un matériau isolant électrique choisi parmi les plastiques isolants et hydrophobes.

11. Procédé de coupage par jet de plasma, dans lequel on met en oeuvre une torche à plasma selon l'une des revendications précédentes pour couper une pièce en matériau métallique, notamment en alliage ferreux, en cuivre ou en alliage cuivreux, en aluminium ou en alliage d'aluminium, en titane ou en alliage de titane, de préférence la pièce est en acier inoxydable ou en acier doux.

12. Procédé selon la revendication 11, **caractérisé en ce que** la torche est agencée sur une poutre, de préférence la tête de coupage est mobile sur la poutre, laquelle poutre est elle-même mobile sur un bâti-support surplombant une table de découpe portant la pièce à couper.

## Patentansprüche

1. Plasmabrenner (1), umfassend einen Brennerkörper (2), durch den mindestens eine Wasserzuleitung (13) hindurchgeht, wobei der Brennerkörper (2) mehrheitlich aus einem elektrisch leitenden Material und die Wasserzuleitung (13) aus einem elektrisch isolierenden Material hergestellt ist, **dadurch gekennzeichnet, dass** der Brenner ferner Mittel zur Erzeugung eines Wasserwirbels umfasst, die von der Wasserzuleitung (13) aus einem elektrisch isolierenden Material mit Wasser versorgt werden.

2. Brenner nach Anspruch 1, **dadurch gekennzeichnet, dass** er ferner ein stromaufwärtiges Rohr (6) und eine Elektrode (4, 5) umfasst.

3. Brenner nach einem der Ansprüche 1 oder 2, **dadurch gekennzeichnet, dass** die Wirbelerzeugungsmittel ein stromabwärtiges Rohr (15) umfassen, das stromabwärts zum stromaufwärtigen Rohr (6) angeordnet ist.

4. Brenner nach einem der vorhergehenden Ansprüche, **dadurch gekennzeichnet, dass** die Wirbelerzeugungsmittel mehrere Rillen, Öffnungen, Leitungen oder dergleichen umfassen, die tangential zur Ausgangsöffnung des stromabwärtigen Rohrs (15) angeordnet sind.

5. Brenner nach einem der vorhergehenden Ansprüche, **dadurch gekennzeichnet, dass** der Brennerkörper (2) mehrheitlich aus einem elektrisch leitenden Material, da unter den Metallen und den Metalllegierungen ausgewählt ist, hergestellt ist.

6. Brenner nach einem der vorhergehenden Ansprüche, **dadurch gekennzeichnet, dass** der Brennerkörper (2) mehrheitlich aus einem elektrisch leitenden Material hergestellt ist, das unter den Metallen mit einer Wärmeleitfähigkeit größer oder gleich 50 W/mK ausgewählt ist.

7. Brenner nach einem der vorhergehenden Ansprüche, **dadurch gekennzeichnet, dass** die Wasserzuleitung (13) aus einem elektrisch isolierenden Material mit einem spezifischen Volumenwiderstand größer oder gleich 1011 Ohm.cm hergestellt ist.

8. Brenner nach einem der vorhergehenden Ansprüche, **dadurch gekennzeichnet, dass** er einen abnehmbaren Brennerkopf (3) umfasst, der das Rohr (6) und die Elektrode (4, 5) trägt.

9. Brenner nach einem der vorhergehenden Ansprüche, **dadurch gekennzeichnet, dass** der Brennerkörper (2) mehrheitlich aus einem elektrisch leitenden Material, das unter Kupfer und seinen Legierungen ausgewählt ist, hergestellt ist.

10. Brenner nach einem der vorhergehenden Ansprüche, **dadurch gekennzeichnet, dass** die Wasserzuleitung (13) aus einem elektrisch isolierenden Material, das unter den isolierenden und hydrophoben Kunststoffen ausgewählt ist, hergestellt ist.

11. Plasmaschneidverfahren, bei dem ein Plasmabrenner nach einem der vorhergehenden Ansprüche eingesetzt wird, um ein Teil aus einem metallischen Material, insbesondere einer Eisenlegierung, Kupfer oder Kupferlegierung, Aluminium oder Aluminiumlegierung, Titan oder Titanlegierung, zu schneiden, wobei das Teil vorzugsweise aus rostfreiem oder weichem Stahl ist.

12. Verfahren nach Anspruch 11, **dadurch gekennzeichnet, dass** der Brenner auf einem Träger angeordnet ist, dass der Schneidkopf vorzugsweise auf dem Träger beweglich ist, wobei der Träger selbst auf einem Stützrahmen beweglich ist, der auf einem Schneidtisch, der das zu schneidende Teil trägt, angeordnet ist.

## Claims

1. Plasma torch (1) comprising a torch body (2) through which at least one water supply pipe (13) passes, most of the torch body (2) being made of an electrically conductive material and said water supply pipe (13) being made of an electrically insulating material, and **characterised in that** the torch further comprises water-vortex generation means which are supplied with water by said water supply pipe (13) made of an electrically insulating material.

2. Torch according to claim 1, **characterised in that** it further comprises an upstream nozzle (6) and an electrode (4, 5).

3. Torch according to either claim 1 or claim 2, **characterised in that** the vortex generation means comprise a downstream nozzle (15) arranged downstream of the upstream nozzle (6).

4. Torch according to any of the preceding claims, **characterised in that** the vortex generation means comprise a plurality of grooves, orifices, pipes or the like which are arranged tangentially to the exit orifice of the downstream nozzle (15).

5. Torch according to any of the preceding claims, **characterised in that** most of the torch body (2) is made of an electrically conductive material selected from among metals and metal alloys.

6. Torch according to any of the preceding claims, **characterised in that** most of the torch body (2) is made of an electrically conductive material selected from among metals having thermal conductivity greater than or equal to 50 W/mK.

7. Torch according to any of the preceding claims, **characterised in that** said water supply pipe (13) is made of an electrically insulating material having transverse electrical resistance greater than or equal to 10¹¹ ohm.cm.

8. Torch according to any of the preceding claims, **characterised in that** it comprises a detachable torch head (3) bearing the nozzle (6) and the electrode (4,5).

9. Torch according to any of the preceding claims, **characterised in that** most of the torch body (2) is made of an electrically conductive material selected from among copper and alloys thereof.

10. Torch according to any of the preceding claims, **characterised in that** said water supply pipe (13) is made of an electrically insulating material selected from among insulating and hydrophobic plastics.

11. Plasma-jet cutting method, wherein a plasma torch according to any of the preceding claims is used to cut a workpiece made of metal material, in particular made of a ferrous alloy, of copper or a copper alloy, of aluminium or an aluminium alloy, of titanium or a titanium alloy, the workpiece preferably being made of stainless steel or soft steel.

12. Method according to claim 11, **characterised in that** the torch is arranged on a beam, the cutting head preferably being movable on the beam, which beam is itself movable on a supporting frame projecting from a cutting table bearing the workpiece to be cut.
